# EUROPEAN PATENT APPLICATION

(11) **EP 2 487 573 A2**
(43) Date of publication of application: **15.08.2012**
(21) Application number: 11184444.5
(22) Date of filing: 07.10.2011
(51) Int. Cl.: G06F 3/048

(54) **Electronic device and method for separating drawing content**

(30) Priority: 14.02.2011 TW 100104750
(71) Applicant: Hon Hai Precision Industry Co., Ltd., New Taipei City (TW)
(72) Inventor: Lin Tay-Yang, Tu-Cheng, New Taipei (TW); Chen, Chin-Feng, Tu-Cheng, New Taipei (TW); Liu, Shu-Ming, Tu-Cheng, New Taipei (TW); Shih, Chi-Tse, Tu-Cheng, New Taipei (TW); Hou, Ni-Chun, Tu-Cheng, New Taipei (TW); Hsu, Hsin-Chih, Tu-Cheng, New Taipei (TW); Du, Cheng-Hsiu, Tu-Cheng, New Taipei (TW)
(74) Representative: Gray, John James

(57) **Abstract**

An electronic device includes a touch screen, a processor, a storage device, and one or more modules stored in the storage device. The one or more modules are executed by the processor to display a first area of a drawing on the touch screen. When the first area receives a drawing operation, the one or more modules detect a contact path on the first area of the touch screen. The one or more modules then split a first sub-area with first content in the first sub-area from the first area along the contact path upon a condition the contact path substantially moves across a first edge and a second edge of the first area.

## Description

### Field

The disclosure generally relates to an electronic device and a method for separating drawing content in the electronic device.

### BackGround

An electronic device may have many software applications to draw a graph or picture, such as MS Paint, or Photoshop^{TM}. The graph or picture may be constructed via drawing tools. If a partial graph or picture is to be divided into another file, a new page must be constructed by clicking on a new page button to receive the partial graph or picture. It is inconvenient to split the drawing especially through a touch screen.

### BRIEF DESCRIPTION OF THE DRAWINGS

Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 is a block view of an electronic device in one embodiment.

FIG. 2 is a block view of one or more modules for separating drawing content in the electronic device in one embodiment.

FIG. 3 is a user interface on a touch screen of the electronic device in one embodiment.

FIG. 4 is a flow chart illustrating a method for separating the drawing content in one embodiment.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module," as used herein, refers to logic embodied in hardware or firmware, or to a collection of software instructions written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

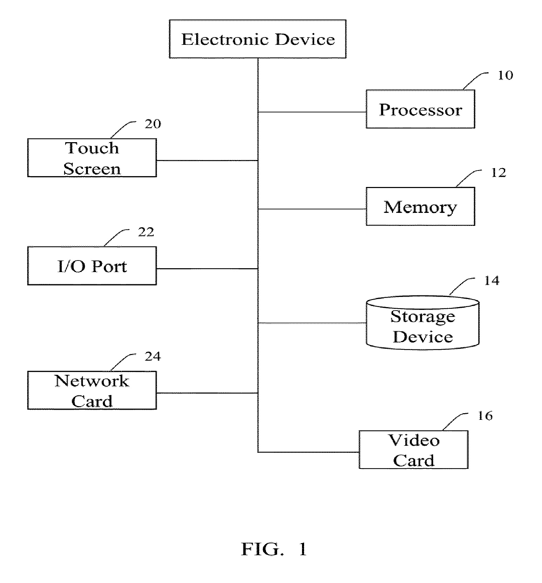

Referring to FIG. 1, in one embodiment, an electronic device may be a portable electronic device, such as a laptop computer or a mobile phone. The electronic device may include a processor 10, a memory 12, a storage device 14, a video card 16, a touch screen 20, an input and output (I/O) port 22, and a network card 24.

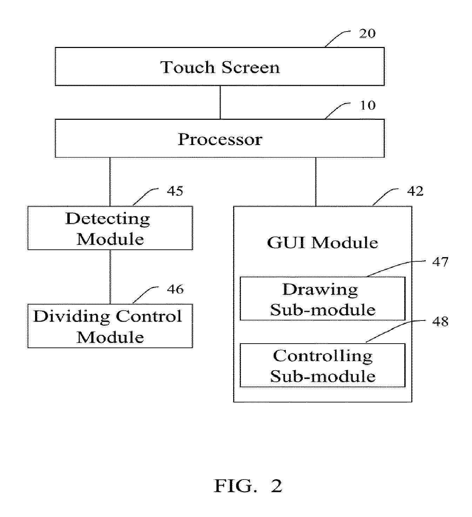

Referring to FIG. 2, the storage device may store one or more modules to create and split a drawing. The one or more modules may include a graphic user interface (GUI) module 42, a detecting module 45, a dividing control module 46. The GUI module 42 may include a drawing sub-module 47 and a controlling sub-module 48. The one or more modules may be executed by the processor 10 to perform drawing operation.

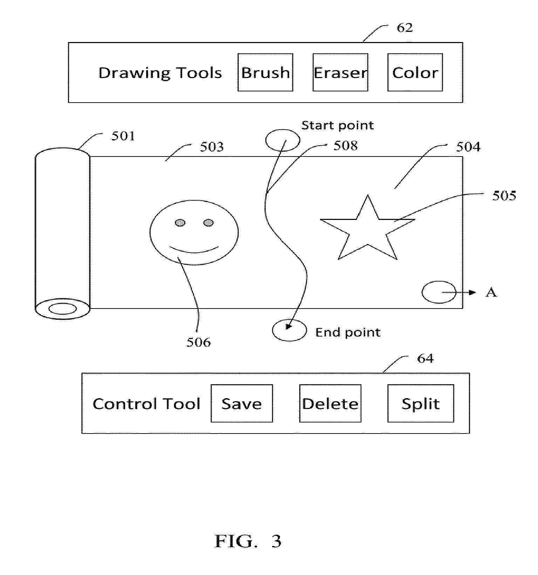

Referring to FIG. 3, the GUI module 42 may be executed by the processor 10 to create a user interface. When the electronic device starts up a drawing application or enters into a drawing mode, a drawing area 503, a drawing tool bar 62, and a control tool bar 64 can be shown in the user interface.

The drawing area 503 may be partially shown in the user interface. A back area of the drawing area 503 may be gradually shown when the drawing area 503 is dragged along a direction "A" as shown in FIG. 3. An animation 501 may be shown at a side of the drawing area 503 and may be played when the drawing area 503 moves along the direction "A". The direction "A" extends away from the animation 501. A playing speed of the animation 501 may be directly proportional to a moving speed of the drawing area 503. The animation 501 may be a rolling scroll.

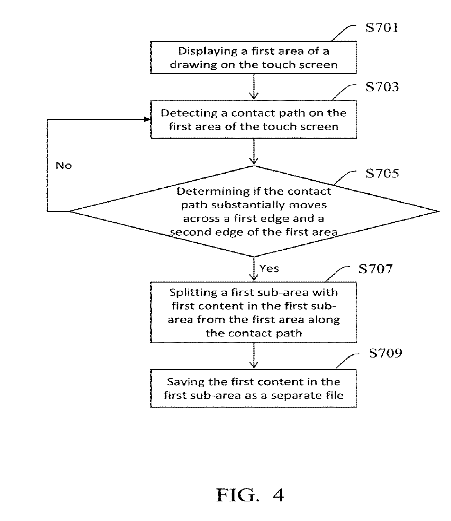

The drawing area 530 may create at least contents 505 and 506 by a plurality of drawing tools in the drawing tool bar 62 controlled by the drawing sub-module 47. The contents 505, 506 may include image, text, or combination of image and text. The detecting module 45 may detect a contact path 508 applied on the drawing area 503 of the touch screen 20 by the user. The detecting module 45 may also determine if the contact path 508 substantially moves across a first edge and a second edge of the drawing area 503. In one embodiment, the drawing area 503 may be rectangular. The first edge and the second edge are two opposite edges, and the first edge may be parallel to the second edge. If the contact path 508 substantially moves across the first edge and the second edge, the dividing module 46 may split a sub-area 504 with the content 505 from the drawing area 503 along the contact path 508. The separated sub-area 504 can be operated as a new drawing board. A plurality of control tools may be accessible on the control tool bar 64. The control tools may include commands, such as save, delete, copy, cut, or split the drawing area 503 or the sub-area 504.
Referring to FIG. 4, in one embodiment, a computer-implemented method for separating drawing content may include the following blocks:

In block S701, displaying a first area of a drawing on the touch screen 20. The first area may receive a drawing operation of a user.

In block S703, detecting a contact path on the first area of the touch screen 20 by the detecting module 45.

In block S705, determining if the contact path substantially moves across a first edge and a second edge of the first area by the detecting module 45. If the contact path substantially moves across a first edge and a second edge of the first area, then the method continues to block S707. Otherwise, the method returns to block S703.

In block S707, splitting a first sub-area with first content in the first sub-area from the first area along the contact path by the splitting module 46.

In block S709, saving the first content in the first sub-area as a separate file.

The method above may further include: dragging the first sub-area on the touch screen in response to a dragging operation by a user; displaying at least one command tool on the touch screen associating with at least one control operation to the content in the first sub-area; displaying at least one drawing tool on the touch screen associating with the drawing operation in the first area; displaying a second area when the first area moves along a first direction on the touch screen 20 by the user; and playing the animation 501 at a side of the second area when the first area moves along the first direction.

Even though numerous characteristics and advantages have been set forth in the foregoing description of embodiments, together with details of the structures and functions of the embodiments, the disclosure is illustrative only and changes may be made in detail, especially in matters of shape, size, and arrangement of parts within the principles of the disclosure to the full extent indicated by the broad general meaning of the terms in which the appended claims are expressed.

Depending on the embodiment, certain blocks or methods described may be removed, others may be added, and the sequence of blocks may be altered. It is also to be understood that the description and the claims drawn for or in relation to a method may include some indication in reference to certain blocks. However, any indication used is only to be viewed for identification purposes and not as a suggestion as to an order for the blocks.

## Claims

1. A computer-implemented method, comprising:
displaying a first area of a drawing on a touch screen of a device, wherein the first area is adapted to receive drawing operations;
detecting a contact path on the first area of the touch screen; and
splitting a first sub-area with first content in the first sub-area from the first area along the contact path upon a condition determining the contact path substantially moves across a first edge and a second edge of the first area.

2. The method of the claim 1, further comprising dragging the first sub-area on the touch screen in response to a dragging operation.

3. The method of the claim 1, further comprising displaying at least one command tool on the touch screen associating with at least one control operation to the content in the first sub-area, the at least one control operation comprising save, delete, or split operation.

4. The method of the claim 1, further comprising saving the first content in the first sub-area as a separate file.

5. The method of the claim 1, further comprising displaying at least one drawing tool on the touch screen associated with the drawing operation in the first area.

6. The method of the claim 1, further comprising displaying a second area when the first area moves along a first direction on the touch screen.

7. The method of the claim 6, further comprising playing an animation at a side of the second area when the first area moves along the first direction, wherein the first direction extends away from the animation.

8. The method of the claim 7, wherein a playing speed of the animation is directly proportional to a moving speed of the first area.

9. The method of the claim 1, wherein the first content comprises image, text, or combination of image and text.

10. The method of the claim 1, wherein the first area is rectangular, and the first edge is parallel to the second edge.

11. An electronic device, comprising:
a touch screen;
a processor;
a storage device; and
one or more modules stored in the storage device, wherein the one or more modules are adapted to be executed by the processor to:
display a first area of a drawing on the touch screen, wherein the first area is adapted to receive drawing operations;
detect a contact path on the first area of the touch screen; and
split a first sub-area with first content in the first sub-area from the first area along the contact path upon a condition the contact path substantially moves across a first edge and a second edge of the first area.

12. The electronic device of the claim 11, wherein the one or more modules are further adapted to drag the first sub-area on the touch screen in response to a dragging operation.

13. The method of the claim 11, wherein the one or more modules are further adapted to display at least one command tool on the touch screen associated with at least one control operation to the content in the first sub-area, the at least one control operation comprising save, delete, or split operation.

14. The electronic device of the claim 11, wherein the one or more modules are further adapted to save the first content in the first sub-area as a separate file.

15. The electronic device of the claim 11, wherein the one or more modules are further adapted to display at least one drawing tool on the touch screen associated with the drawing operation in the first area.

16. The electronic device of the claim 11, wherein the one or more modules are further adapted to display a second area when the first area moves along a first direction on the touch screen.

17. The electronic device of the claim 16, wherein the one or more modules are further adapted to play an animation at a side of the second area when the first area moves along the first direction, and the first direction extends away from the animation.

18. The electronic device of the claim 17, wherein a playing speed of the animation is directly proportional to a moving speed of the first area.
